# EUROPEAN PATENT SPECIFICATION

(11) **EP 0 591 872 B1**
(45) Date of publication and mention of the grant of the patent: **01.05.1996**
(21) Application number: 93115922.2
(22) Date of filing: 01.10.1993
(51) Int. Cl.: F16H 61/00, F16H 9/14, B62M 9/06

(54) **Continuously variable speed drive, particularly for two-wheeled vehicles**
Stufenlos regelbares Getriebe, insbesondere für Zweiradfahrzeuge
Transmission à variation continue de vitesse en particulier pour des véhicules à deux roues

(30) Priority: 05.10.1992 IT TO920804
(43) Date of publication of application: 13.04.1994
(73) Proprietor: PIAGGIO VEICOLI EUROPEI S.p.A., I-56025 Pontedera Pisa (IT)
(72) Inventor: Nesti, Paolo, I-56010 Ghezzano (IT)
(74) Representative: Jorio, Paolo

(56) References cited:
- DE-B- 1 450 681
- FR-A- 2 457 210

## Description

The present invention relates to a variable-speed drive, particularly for two-wheeled vehicles.

The variable-speed drive according to the present invention is of the type comprising a pair of pulleys about which is wound a continuous belt for transmitting motion from a drive pulley to a driven pulley. Each pulley comprises a pair of conical disks, one of which is movable axially in relation to the other for adjusting the width of the race defined by the disks and so varying the radius of the belt about the pulley.

On variable-speed drives of the aforementioned type, the movable disk of one of the pulleys, normally the driven one, is pushed by at least a spring towards the other disk on the same pulley; and the movable disk of the other pulley, normally the drive one, is pushed towards the other disk on the same pulley by the centrifugal force produced by the rotation of bodies torsionally integral with and movable radially in relation to the movable disk. Thus, as the angular speed of the drive pulley increases, said bodies push the movable disk towards the other disk, thus increasing the belt radius on the drive pulley and reducing that of the driven pulley.

Variable-speed drives of the above type also comprise a centrifugal clutch downstream from the driven pulley.

A variable-speed drive as defined before and comprising the features of the preamble of claim 1 is known for instance from FR-A-2 457 210.

On variable-speed drives of the above type, the gear ratio (the ratio of the angular speed of the drive pulley to that of the driven pulley) or the speed of the vehicle varies, as a function of the angular speed of the drive pulley, according to a nonlinear law depending on the geometric characteristics of the drive, the bodies integral with the movable disk on the drive pulley, the elastic characteristics of the spring by which the movable disk on the driven pulley is pushed towards the other, and, finally, on the characteristics of the clutch downstream from the driven pulley.

Therefore, variable-speed drives of the above type may fail to provide for varying the law governing the relationship between the gear ratio or the speed of the vehicle and the angular speed of the engine, and so enabling selection of the gear ratio 'oest suited to the operating conditions of the vehicle. Under certain conditions, in fact, the gear ratio may be so high as to prevent the full power of the engine from being exploited.

It is an object of the present invention to provide a variable-speed drive of the type briefly described above, which provides for achieving different laws governing variation of the gear ratio (or vehicle speed) as a function of the angular speed of the drive shaft, for better adapting the vehicle to different operating conditions.

According to the present invention, there is provided a variable-speed drive, particularly for two-wheeled vehicles, comprising the features as defined in claim 1.

The design and operation of the variable-speed drive according to the present invention will be described by way of example with reference to the accompanying drawings, in which:
Fig.1 shows a schematic vertical section of the variable-speed drive according to the present invention;
Fig.s 2 and 3 show partially sectioned views of part of the Fig.1 drive in two different operating positions;
Fig.4 shows an axial section of a unit on a control device forming part of the variable-speed drive;
Fig.5 shows a section of the Fig.4 unit along line V-V;
Fig.6 shows a vertical section of part of the control device;
Fig.s 7 and 8 show respective plan and side views of part of the control device;
Fig.9 shows a series of graphs illustrating the relationship between the speed of the vehicle fitted with the variable-speed drive according to the present invention and the angular speed of the drive shaft.

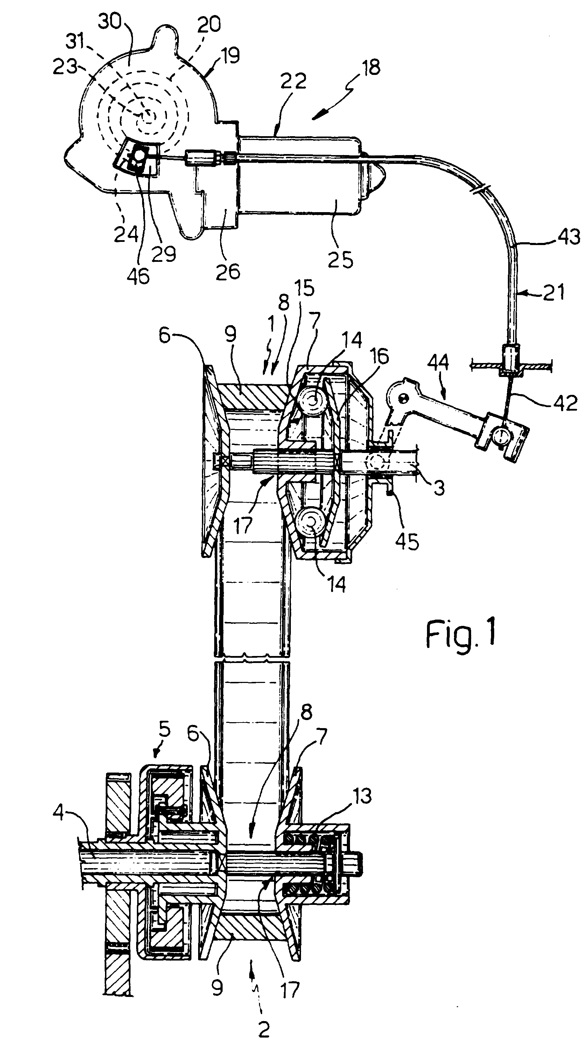

As shown in Fig.1, the variable-speed drive according to the present invention comprises a pair of pulleys: a drive pulley 1 connected to a drive shaft 3; and a driven pulley 2 connected to a driven shaft 4 for transmitting motion to the vehicle wheels. Downstream from and integral with driven pulley 2, there is provided a known type of centrifugal clutch indicated as a whole by 5.

Each of pulleys 1, 2 comprises a substantially conical disk 6 fitted to respective shaft 3, 4; and a conical disk 7 movable axially towards disk 6.

Each pair of disks 6 and 7 defines a race 8 housing a continuous drive belt 9 with a substantially trapezoidal section. Movable disk 7 of driven pulley 2 is pushed towards disk 6 on the same pulley by a spring 13, whereas movable disk 7 of drive pulley 1 is pushed towards disk 6 on the same pulley by the centrifugal force produced by the rotation of bodies 14 torsionally integral with and movable radially in relation to movable disk 7. Said bodies 14 conveniently consist of rollers movable inside radial grooves on disk 7 and resting on a substantially conical active surface 15. Rollers 14 also rest on a further conical disk 16 fixed axially in relation to shaft 3 and defining, with surface 15, a cavity increasing in width alongside an increase in radius.

Each of movable disks 7 is conveniently connectable to respective shaft 3, 4 via a splined coupling 17 or other similar member.

The variable-speed drive according to the present invention comprises a device 18 for controlling displacement of movable disk 7 of drive pulley 1. As explained later on, control device 18 provides for exerting on disk 7, as this moves towards disk 6, a predetermined force generated by elastic means 19 and of such a direction as to oppose displacement of disk 7 towards disk 6.

Device 18 may also be set to a number of configurations, in each of which it exerts a predetermined force on movable disk 7 as this moves towards disk 6.

Elastic means 19 comprise at least a spring 20, which exerts said predetermined force on movable disk 7 of pulley 1 via a transmission 21 connecting spring 20 to disk 7. Device 18 also comprises means for varying the preload of spring 20 and so varying said predetermined force, said means comprising an actuator 22 for moving one end 23 of spring 20 by a predetermined amount, the other end 24 of spring 20 being connected to transmission 21. Actuator 22 conveniently comprises an electric motor 25 powering a reduction gear 26 connected to end 23 of spring 20.

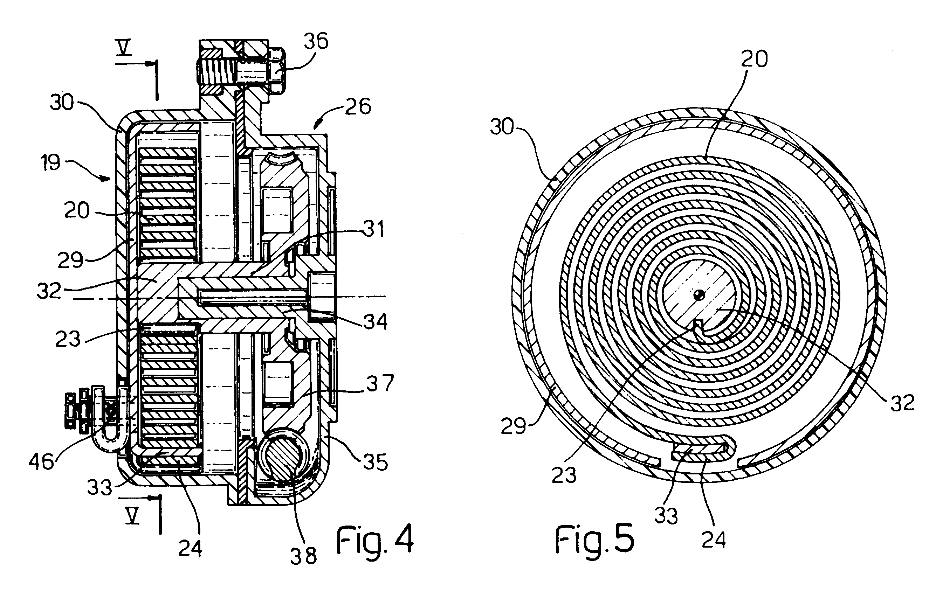

More specifically, device 18 comprises a coil spring 20 (Fig.s 4 and 5) housed inside a bell-shaped body 29 rotating inside a housing 30 integral with the casing of the variable-speed drive; and a shaft 31 coaxial with body 29 and rotating in housing 30. End 32 of shaft 31 is inserted inside body 29, and spring 20 presents one end 24 fitted to a projection 33 of body 29 (Fig.5), and the other end 23 fitted inside a cavity on end 32 of shaft 31, as shown in Fig.5. Shaft 31 rotates on a pin 34 (Fig.4) forming part of a casing 35 integral with the casing of the variable-speed drive and to which housing 30 is fitted by means of screws 36. Shaft 31 is fitted integral with a helical gear 37 meshing with a worm 38 to which motion is transmitted by reduction gear 26 controlled by electric motor 25. In the above arrangement, reduction gear 26 is irreversible, so that the torque exerted by electric motor 25 on worm 38 rotates helical gear 37 and consequently shaft 31, whereas the torque exerted on shaft 31 cannot rotate worm 38.

Transmission 21 comprises a flexible cable 42 (Fig.1) running inside a sheath 43. A first end of cable 42 is connected via an oscillating lever 44 to a collar 45 for operating movable disk 7 of drive pulley 1; while the other end of cable 42 is connected to a projection 46 projecting from the outer surface of body 29, as shown in Fig.s 1 and 4.

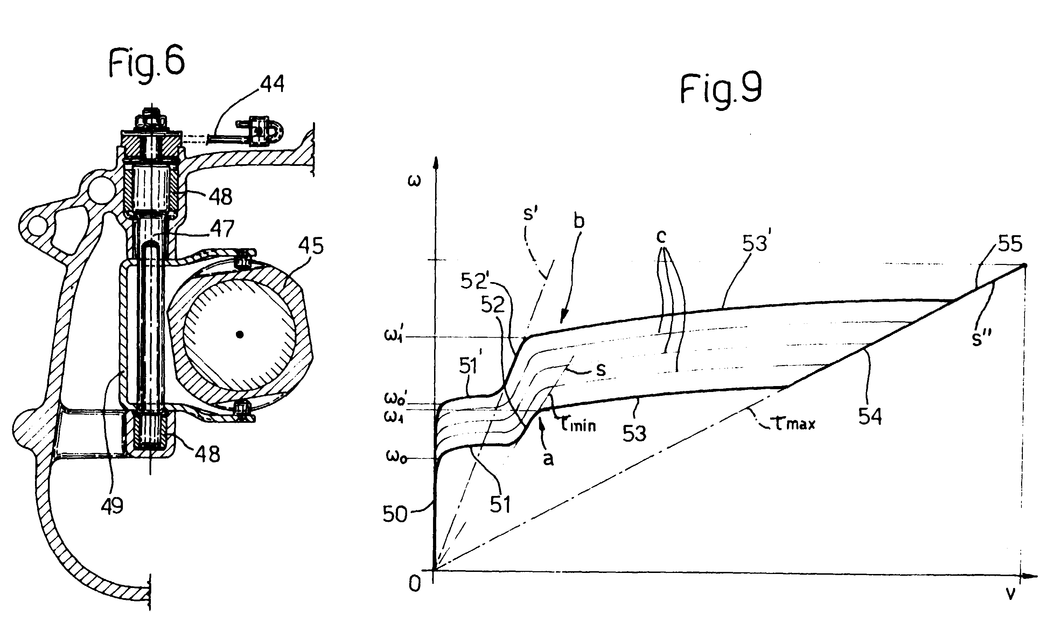

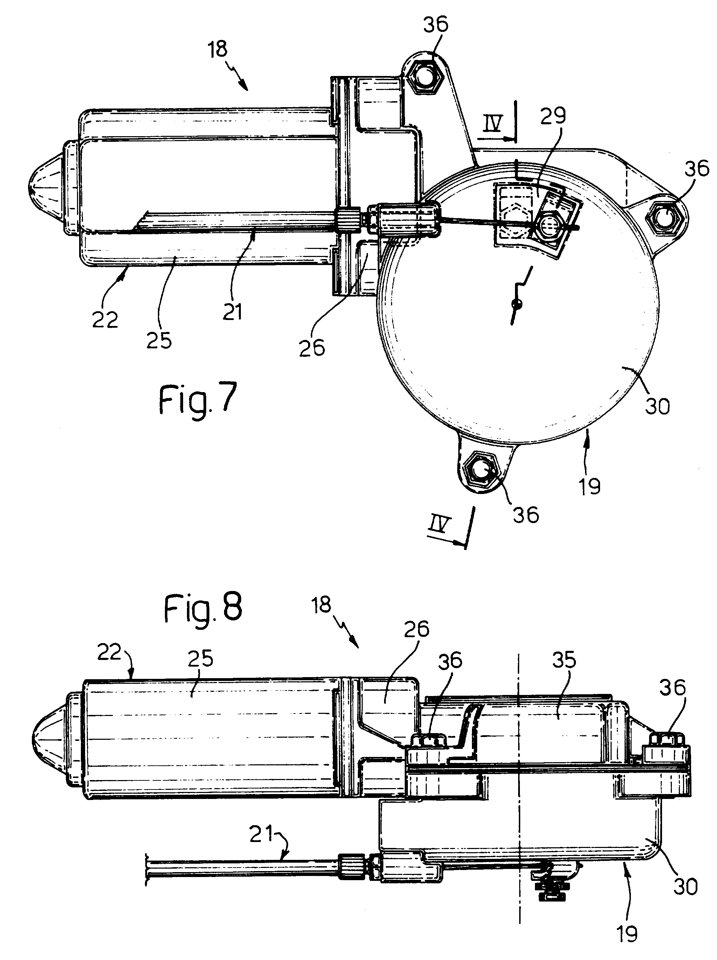

Oscillating lever 44 is integral with a pin 47 (Fig.6) oscillating on a pair of bearings 48 on the casing of the variable-speed drive, and is connected to a fork 49 having a pair of arms engaging respective grooves on operating collar 45.

The variable-speed drive as described above operates as follows.

Device 18 for controlling displacement of movable disk 7 of pulley 1 may be set to a number of configurations, each corresponding with a given preload of spring 20. Said preload is varied by exciting motor 25, which rotates worm 38 so as to rotate helical gear 37 integral with shaft 31. As a result, end 23 of spring 20 is rotated about the axis of shaft 31 so as to impart a given preload and so vary the torque applied on body 29 by the other end 24 of spring 20. This torque produces a pulling force on cable 42 with which corresponds a predetermined force on operating collar 45 in such a direction as to oppose displacement of disk 7 towards disk 6.

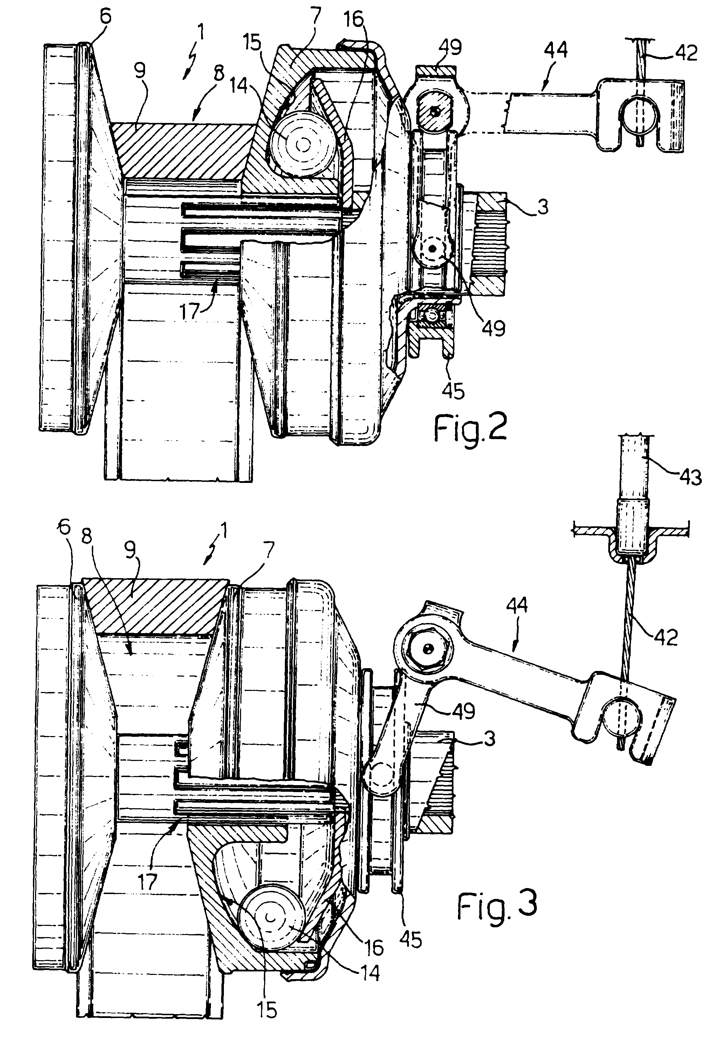

Assuming spring 20 has been set to a predetermined preload as described above, when the vehicle is started drive pulley 1 is set to a configuration wherein disk 7, for that particular preload, is at a maximum distance from disk 6, and the radius of belt 9 on drive pulley 1 is minimum. Such a configuration is shown in Fig.2 wherein fork 49 is positioned with its arms substantially perpendicular to the axis of the pulley. For the same preload, belt 9 on driven pulley 2 presents a maximum radius, by virtue of the force exerted by helical spring 13 providing for a minimum distance between disks 6 and 7.

As the speed of drive shaft 3 gradually increases, centrifugal clutch 5 switches from the released configuration (when the engine was started) to the engaged configuration for transmitting the torque.

A first operating mode of the variable-speed drive, corresponding with a minimum preload of spring 20, will be described with reference to the Fig.9 graphs showing the relationship between vehicle speed v and the angular speed ω of drive shaft 3. The first phase in said first operating mode is shown by portion 50 of curve a wherein, between angular speeds 0 and ω₀ of drive shaft 3, the vehicle remains stationary (v = 0) in that the angular speed of shaft 3 is too low to commence engagement of centrifugal clutch 5. At speed ω₀, the clutch engagement phase commences and the vehicle starts moving. The actual clutch engagement phase is shown by the almost horizontal portion 51 of curve a, during which phase sliding occurs between the mating surfaces of clutch 5 and the torque transmitted by the clutch increases gradually. During the same phase, the gear ratio of the variable-speed drive increases so that the torque reaching clutch 5 decreases in relation to the initial value.

The clutch engagement phase terminates at the intersection of portion 51 and ray s indicating the gear ratio value τₘᵢₙ for the minimum preload setting of spring 20 in said first operating mode. At angular speed ω₁, at which rollers 14 start moving, disk 7 moves towards disk 6, thus increasing the radius of belt 9 on pulley 1 and reducing that of pulley 2. During this phase, the force exerted by spring 20 is transmitted via transmission 21 to movable disk 7 of pulley 1 so as to oppose displacement of disk 7. As disk 7 moves, lever 44 rotates slightly from the Fig.2 to the Fig.3 configuration accompanied by a corresponding rotation of body 29. This operating phase is shown by portion 53 of curve a wherein the increase in vehicle speed v is produced by the increase in the gear ratio resulting from the variation in the radius of belt 9 on the drive and driven pulleys. The maximum belt radius on pulley 1 (Fig.3) corresponds with the end point of portion 53 on ray s'' indicating the maximum gear ratio τₘₐₓ. As the angular speed of shaft 3 increased further, vehicle speed v increases linearly alongside ω, as shown by portions 54 and 55 of curve a, by virtue of the variable-speed drive now being set to gear ratio τₘₐₓ.

For achieving a different operating mode from that described above, for better exploiting the full power of the engine, and wherein each vehicle speed v corresponds with a higher angular speed ω of the drive shaft, the preload of spring 20 need simply be increased by appropriately exciting electric motor 25. This results in an increase in the torque generated elastically on body 29, and consequently in the force exerted on and opposing displacement of disk 7 towards disk 6, so that a given axial position of disk 7 in relation to disk 6 corresponds with a higher angular speed ω as compared with the same position in the first operating mode.

A second operating mode, corresponding with a maximum preload of spring 20, will be described with reference to curve b in Fig.9, which, while presenting the same operating phases and form as curve a, is located substantially higher, indicating that a given vehicle speed v is achieved at a higher angular speed ω of drive shaft 3. In particular, the clutch 5 engagement phase commences at a higher angular speed ω₀, as compared with the previous value ω₀, by virtue of the torque on driven pulley 2 to be transmitted by clutch 5 being higher as a consequence of the minimum gear ratio provided for by the variable-speed drive with a maximum preload of spring 20 being lower than that provided for in the first operating mode. The clutch engagement phase, indicated by portion 51', thus terminates at the intersection of portion 51' and ray s' indicating the new minimum gear ratio value τₘᵢₙ, and is followed by portion 52' wherein vehicle speed v increases in proportion to angular speed ω. The variation in the gear ratio (portion 53') commences at a higher angular speed ω₁, than that (ω₁) of the first operating mode, and, upon the variable-speed drive reaching gear ratio τₘₐₓ indicated by ray s", vehicle speed v increases linearly alongside angular speed ω as shown by portion 55.

The second operating mode thus provides for the same pattern v = f(ω) as in the first, but with different parameter values as a consequence of the difference in the initial operating values of minimum gear ratio τₘᵢₙ and, consequently, the torque to be transmitted by clutch 5.

By adjusting the preload of spring 20 to values between those of the above two operating modes, intermediate operating modes may therefore be achieved as shown by curves c.

For improving vehicle performance and better exploiting the full power of the engine, therefore, device 18 is so set as to provide for a higher preload of spring 20 corresponding with one of the higher curves c in Fig.9.

## Claims

1. A variable-speed drive, particularly for two-wheeled vehicles, comprising:
a drive and a driven pulley (1, 2) about which is wound a continuous belt (9) for transmitting motion from said drive pulley (1) to said driven pulley (2); a centrifugal clutch (5) being provided downstream from said driven pulley (2);
each of said pulleys (1, 2) comprising a pair of conical disks (6, 7), one disk (7) of which is movable axially in relation to the other disk (6) for adjusting the width of the race (8) defined by the disks (6, 7) and so varying the belt radius on the pulley;
said movable disk (7) of one of said pulleys being pushed by at least a spring (13) towards the other disk (6) on said one pulley;
said movable disk (7) of the other of said pulleys being pushed towards the other disk (6) on the same pulley by the centrifugal force produced by the rotation of bodies (14) torsionally integral with and movable radially in relation to said movable disk (7), so that, as the angular speed of said other pulley increases, the relative movable disk (7) is moved by said bodies (14) towards the other disk (6), so as to increase the belt radius on said other pulley;
characterized by the fact that it comprises:
a device (18) for controlling displacement of said movable disk (7) of said other pulley, and designed to exert on said disk (7) a predetermined force, generated by elastic means (19), as the movable disk (7) moves towards the other disk (6); said predetermined force being of such a direction as to oppose displacement of the movable disk (7) towards the other disk (6);
said device (18) being settable to a number of configurations, in each of which it exerts a predetermined force on said movable disk (7) of said other pulley as said movable disk (7) moves towards the other disk (6).

2. A variable-speed drive as claimed in Claim 1, characterized. by the fact that said elastic means (19) comprise at least a spring (20) for exerting said predetermined force on said movable disk (7) of said other pulley (1) via a transmission (21) connecting said spring (20) to said disk (7); said device (18) also comprising means (25, 26) for varying the preload of said spring (20) and so varying said predetermined force.

3. A variable-speed drive as claimed in Claim 2, characterized by the fact that said means (25, 26) for varying the preload of said spring (20) comprise an actuator (25) for achieving a predetermined movement of a first end (23) of said spring (20) for varying said preload; the other end (24) of said spring (20) being connected to said transmission (21).

4. A variable-speed drive as claimed in Claim 3, characterized by the fact that said actuator comprises an electric motor (25) for powering a reduction gear (26) connected to said first end (23) of said spring (20).

5. A variable-speed drive as claimed in one of the foregoing Claims, characterized by the fact that said device (18) comprises a coil spring (20) housed inside a bell-shaped body (29) rotating inside a housing (30) integral with the casing of the variable-speed drive; and a shaft (31) coaxial with said body (29), rotating in said housing (30), and having one end (32) inserted inside said body (29); said coil spring (20) having one end (24) fitted to said body (29) and the other end (23) fitted to said shaft (31); said shaft (31) being activated by said reduction gear (26) of said actuator (25); and said body (29) being connected to said transmission (21).

6. A variable-speed drive as claimed in one of the foregoing Claims, characterized by the fact that said transmission (21) comprises a flexible cable (42) running inside a sheath (43) and having a first end connected via an oscillating lever (44) to a collar (45) for operating said movable disk (7) of said other pulley, and another end connected to a projection (46) on said bell-shaped body (29).

7. A variable-speed drive as claimed in Claim 6, characterized by the fact that said oscillating lever (44) is integral with a pin (47) oscillating on a pair of bearings (48) on said casing, and is connected to a fork (49) engaging said operating collar (45).

8. A variable-speed drive as claimed in one of the foregoing Claims, characterized by the fact that said reduction gear (26) of said actuator (25) comprises a worm-helical gear pair (38, 37), the helical gear (37) of which is integral with said shaft (31).

9. A variable-speed drive as claimed in Claim 8, characterized by the fact that said worm-helical gear pair (38, 37) is housed in a box (35) connected to said housing (30) housing said bell-shaped body (29).

## Patentansprüche

1. Stufenlos regelbares Getriebe, insbesondere für Zweiradfahrzeuge, mit:
einer Antriebsscheibe und einer Abtriebsscheibe (1, 2), um die ein kontinuierlicher Riemen (9) zur Bewegungsübertragung von der Antriebsscheibe (1) zur Abtriebsscheibe (2) gewickelt ist, und einer zur Abtriebsscheibe (2) nachgeschalteten Fliehkraftkupplung (5),
wobei jede der Riemenscheiben (1, 2) ein Paar Kegelscheiben (6, 7) umfaßt, von denen eine Scheibe (7) zur anderen Scheibe (6) axial beweglich ist, um die Breite der von den Scheiben (6, 7) gebildeten Bahn (8) einzustellen und so den Radius des Riemens auf der Riemenscheibe zu ändern;
wobei die bewegliche Scheibe (7) von einer der Riemenscheiben durch mindestens eine Feder (13) zur anderen Scheibe (6) auf der einen Riemenscheibe hingedrückt wird;
wobei die bewegliche Scheibe (7) der anderen Riemenscheibe mittels der Fliehkraft, die durch die Drehung der Körper (14) erzeugt wird, welche sich zusammen mit der beweglichen Scheibe (7) drehen und radial zu ihr beweglich sind, zur anderen Scheibe (6) auf der gleichen Riemenscheibe gedrückt wird, so daß beim Anstieg der Winkelgeschwindigkeit der anderen Riemenscheibe die bewegliche Scheibe (7) durch die Körper (14) zur anderen Scheibe (6) bewegt wird und so der Radius des Riemens auf der anderen Riemenscheibe erhöht wird;
dadurch gekennzeichnet, daß es umfaßt:
eine Vorrichtung (18) zum Steuern der Verschiebung der beweglichen Scheibe (7) der anderen Riemenscheibe und zum Anlegen einer vorgegebenen Kraft, die von einer federnden Einrichtung (19) erzeugt wird, an die Scheibe (7), wenn sich die bewegliche Scheibe (7) zur anderen Scheibe (6) bewegt; wobei die Richtung der vorgegebenen Kraft entgegengesetzt zur Verschiebung der beweglichen Scheibe (7) zur anderen Scheibe (6) hin ist;
wobei die Vorrichtung (18) auf eine Reihe von Konfigurationen einstellbar ist, in denen jeweils eine vorbestimmte Kraft auf die bewegliche Scheibe (7) der anderen Riemenscheibe ausgeübt wird, wenn sich die bewegliche Scheibe (7) zur anderen Scheibe (6) hinbewegt.

2. Stufenlos regelbares Getriebe gemäß Anspruch 1, dadurch gekennzeichnet, daß die federnde Einrichtung (19) mindestens eine Feder (20) umfaßt, mit der die vorgegebene Kraft über eine Kraftübertragungseinheit (21), welche die Feder (20) mit der Scheibe (7) verbindet, an die bewegliche Scheibe (7) der anderen Riemenscheibe (1) angelegt wird, wobei die Vorrichtung (18) desweiteren Einrichtungen (25, 26) zum Verändern der Vorspannung der Feder (20) und damit zum Variieren der vorgegebenen Kraft aufweist.

3. Stufenlos regelbares Getriebe gemäß Anspruch 2, dadurch gekennzeichnet, daß die Einrichtungen (25, 26) zum Verändern der Vorspannung der Feder (20) ein Stellglied (25) umfassen, mit dem eine vorbestimmte Bewegung eines ersten Endes (23) der Feder (20) erreicht wird. um so die Vorspannung zu variieren, wobei das andere Ende (24) der Feder (20) mit der Kraftübertragungseinheit (21) verbunden ist.

4. Stufenlos regelbares Getriebe gemäß Anspruch 3, dadurch gekennzeichnet, daß das Stellglied einen elektrischen Motor (25) für den Antrieb eines Untersetzungsgetriebes (26), welches mit dem ersten Ende (23) der Feder (20) verbunden ist, umfaßt.

5. Stufenlos regelbares Getriebe gemäß einem der vorangegangenen Ansprüche, dadurch gekennzeichnet, daß die Vorrichtung (18) eine Schraubenfeder (20) im Innern eines glockenförmigen Körpers (29), welcher sich in einem Gehäuse (30) zusammen mit der Ummantelung des stufenlos regelbaren Getriebes dreht, sowie eine koaxial zum Körper (29) angeordnete Welle (31) umfaßt, die sich im Gehäuse (30) dreht und deren eines Ende (32) in den Körper (29) eingeführt ist, wobei ein Ende (24) der Schraubenfeder (20) am Körper (29) angebracht und deren anderes Ende (23) an der Welle (31) befestigt ist und die Welle (31) mit Hilfe des Untersetzungsgetriebes (26) des Stellgliedes (25) betätigt wird und der Körper (29) mit der Kraftübertragungseinheit (21) verbunden ist.

6. Stufenlos regelbares Getriebe gemäß einem der vorangegangenen Ansprüche, dadurch gekennzeichnet, daß die Kraftübertragungseinheit (21) ein flexibles Kabel (42) umfaßt, welches in einem Mantel (43) läuft und dessen eines Ende über einen Schwinghebel (44) mit einem Tragkranz (45) verbunden ist, damit die bewegliche Scheibe (7) der anderen Riemenscheibe betätigt werden kann, und dessen anderes Ende mit einem Vorsprung (46) auf dem glockenförmigen Körper (29) verbunden ist.

7. Stufenlos regelbares Getriebe gemäß Anspruch 6, dadurch gekennzeichnet, daß der Schwinghebel (44) integral mit einem Zapfen (47) ausgebildet ist, welcher auf einem Lagerpaar (48) an der Ummantelung schwingt und mit einer Gabel (49) verbunden ist, die den Tragkranz (45) funktionsmäßig in Eingriff nimmt.

8. Stufenlos regelbares Getriebe gemäß einem der vorangegangenen Ansprüche, gekennzeichnet dadurch, daß das Untersetzungsgetriebe (26) des Stellgliedes (25) ein schraubenförmiges Schneckengetriebe (38, 37) umfaßt, wobei das Schraubenrad (37) aus einem Stück mit der Welle (31) ausgebildet ist.

9. Stufenlos regelbares Getriebe gemäß Anspruch 8, dadurch gekennzeichnet, daß sich das schraubenförmige Schneckengetriebe (38, 37) in einem Kasten (35) befindet, welcher mit dem Gehäuse (30) verbunden ist, das den glockenförmigen Körper (29) aufnimmt.

## Revendications

1. Transmission à vitesse variable, particulièrement destinée à des véhicules à deux roues, comprenant :
une poulie d'entraînement et une poulie entraînée (1, 2) autour desquelles est enroulée une ceinture continue (9) permettant la transmission d'un mouvement de ladite poulie d'entraînement (1) à ladite poulie entraînée (2) ; un embrayage centrifuge (5) situé en aval de ladite poulie entraînée (2) ;
chacune desdites poulies (1, 2) comprenant une paire de disque coniques (6, 7), l'un des disques (7) étant mobile axialement par rapport à l'autre disque (6), de manière à régler la largeur de la gorge (8) définie par les disques (6, 7), et ainsi de faire varier le rayon de la courroie entourant la poulie ;
le disque mobile (7) de l'une desdites poulies étant repoussé par au moins un ressort (13) vers l'autre disque (6) de ladite poulie ;
le disque mobile (7) de la seconde desdites poulies étant repoussé vers l'autre disque (6) de la même poulie par la force centrifuge produite par la rotation de corps (14) intégrés torsionnellement audit disque mobile (7) et mobiles radialement par rapport à lui, de telle sorte que, lorsque la vitesse angulaire de ladite seconde poulie augmente, le disque mobile (7) est déplacé par lesdits corps (14) vers l'autre disque (6), de manière à augmenter le rayon de la courroie sur la seconde desdites poulies ;
caractérisée en ce qu'elle comprend un dispositif (18) pour contrôler le déplacement dudit disque mobile (7) de ladite seconde poulie, conçu pour exercer sur ledit disque (7) une force prédéterminée, générée par des moyens élastiques (19) lorsque le disque mobile (7) se déplace en direction de l'autre disque (6) ; ladite force prédéterminée ayant une direction telle qu'elle s'oppose au déplacement du disque mobile (7) vers l'autre disque (6) ;
ledit dispositif (18) étant réglable en un certain nombre de configurations, dans chacune desquelles il exerce une force prédéterminée sur ledit disque mobile (7) de ladite seconde poulie lorsque ledit disque mobile (7) se déplace en direction de l'autre disque (6).

2. Transmission à vitesse variable selon la revendication 1, caractérisée en ce que lesdits moyens élastiques (19) comprennent au moins un ressort (20) permettant d'exercer ladite force prédéterminée sur ledit disque mobile (7) de ladite seconde poulie (1), au moyen d'une transmission (21) connectant ledit ressort (20) audit disque (7) ; ledit dispositif (18) comprenant également des moyens (25, 26) pour faire varier la précharge dudit ressort (20) et pour faire ainsi varier ladite force prédéterminée.

3. Transmission à vitesse variable selon la revendication 2, caractérisée en ce que lesdits moyens (25, 26) permettant de faire varier la précharge dudit ressort (20), comprennent un actionneur (25) permettant de réaliser un mouvement prédéterminé d'une première extrémité (23) dudit ressort (20) permettant de faire varier ladite précharge ; l'autre extrémité (24) dudit ressort (20) étant connectée à ladite transmission (21).

4. Transmission à vitesse variable selon la revendication 3, caractérisée en ce que ledit actionneur comprend un moteur électrique (25) permettant d'activer un engrenage de réduction (26) connecté à ladite première extrémité (23) dudit ressort (20).

5. Transmission à vitesse variable selon l'une quelconque des revendications précédentes, caractérisée en ce que ledit dispositif (18) comprend un ressort bobiné (20) logé à l'intérieur d'un corps en forme de cloche (29) tournant à l'intérieur d'un logement (30) faisant partie du carter de la transmission à vitesse variable ; et un arbre (31) coaxial audit corps (29) tournant dans ledit logement (30) et doté d'une extrémité (32) insérée à l'intérieur dudit corps (29) ; ledit ressort bobiné (20) ayant une extrémité (24) fixée audit corps (29) et l'autre extrémité (23) fixée audit arbre (31) ; ledit arbre (31) étant activé par ledit engrenage de réduction (26) de l'actionneur (25) ; et ledit corps (29) étant connecté à ladite transmission (21).

6. Transmission à vitesse variable selon l'une quelconque des revendications précédentes, caractérisée en ce que ladite transmission (21) comprend un câble flexible (42) placé à l'intérieur d'une gaine (43) et dotée d'une première extrémité connectée via un levier oscillant (44) à un collier (45) permettant de faire fonctionner ledit disque mobile (7) de ladite seconde poulie, et une autre extrémité connectée à une protubérance (46) dudit corps en forme de cloche (29).

7. Transmission à vitesse variable selon la revendication 6, caractérisée en ce que ledit levier oscillant (44) comporte une goupille (47) oscillant à l'aide d'une paire de paliers (48) dudit carter, et est connectée à une fourche (49) en prise avec ledit collier de fonctionnement (45).

8. Transmission à vitesse variable selon l'une quelconque des revendications précédentes, caractérisée en ce que ledit engrenage de réduction (26) dudit actionneur (25) comprend une paire d'engrenages à vis sans fin-hélicoïdale (38, 37), l'engrenage hélicoïdal (37) étant intégré audit arbre (31).

9. Transmission à vitesse variable selon la revendication 8, caractérisée en ce que ladite paire d'engrenages à vis sans fin-hélicoïdale (38, 37) est logée dans un boîtier (35) relié audit boîtier (30) logeant ledit corps en forme de cloche (29).
